# FASCICULE DE BREVET EUROPEEN

(11) **EP 1 600 378 B1**
(45) Date de publication et mention de la délivrance du brevet: **12.12.2007**
(21) Numéro de dépôt: 05104338.8
(22) Date de dépôt: 23.05.2005
(51) Int. Cl.: B64D 47/00

(54) **Aéronef comprenant un dispositif de détection et/ou de mesure de perturbations atmospheriques**
Flugzeug mit einer Vorrichtung zur Erfassung und/oder Messung von atmosphärischen Störungen
Aircraft comprising means for atmospheric perturbation detection and/or measuring

(30) Priorité: 25.05.2004 FR 0451019
(43) Date de publication de la demande: 30.11.2005
(73) Titulaire: AIRBUS France, 31060 Toulouse (FR)
(72) Inventeur: Mirand, Pierre, 31100, Toulouse (FR); Lacabanne, Michel, 31170, Tournefeuille (FR)
(74) Mandataire: Poulin, Gérard

(56) Documents cités:
- US-A- 3 856 402
- US-A- 3 866 055
- US-A1- 2003 009 268

## Description

### DOMAINE TECHNIQUE

L'invention concerne un aéronef comprenant un dispositif de détection et/ou de mesure de perturbations atmosphériques.

### ÉTAT DE LA TECHNIQUE ANTÉRIEURE

Actuellement, pour la mesure des perturbations atmosphériques, les avions de transport de 100 places et plus utilisent des capteurs ayant la forme de petites antennes (tubes de Pitot, sondes d'incidence...), ou des capteurs intégrés dans la géométrie avion (par exemple radar protégé par radôme). L'utilisation de nouveaux capteurs, tels que des lidars ("light détection and ranging" : détection par des ondes lumineuses et télémétrie) par exemple, nécessite de trouver des solutions à différents problèmes : Ainsi une fenêtre de visibilité optique, nécessaire pour de tels systèmes, présente des contraintes d'implantation plus importantes que les caméras par exemple.

Cet arrière-plan technologique est illustré par le document US-A-2003/0009268.

L'invention a pour objet d'intégrer à bord d'un aéronef un dispositif de mesure optique des perturbations atmosphériques existant en amont de celui-ci, une telle intégration permettant d'acquérir les vitesses des perturbations en avance par rapport au moment où la perturbation atteint réellement l'aéronef.

### EXPOSÉ DE L'INVENTION

L'invention concerne un aéronef comprenant un dispositif, par exemple optique, de détection et/ou de mesure de perturbations atmosphériques, existant en amont de l'aéronef, disposé entre le nez de l'aéronef et le train d'atterrissage. L'aéronef comprend :
- une boite structure conçue pour supporter les efforts de pressurisation, entourant le dispositif, et disposée en zone pressurisée,
- un carénage aérodynamique qui recouvre cette boîte structure.
- le dispositif de mesure comprend un lidar.
- La boite structure comporte une vitre plate en face avant et est située à l'extérieur de l'aéronef sous le carénage.
- Le lidar peut avoir la forme d'un « L », la partie verticale du L étant située à l'intérieur de l'aéronef, et la partie horizontale du L étant située à l'extérieur de l'aéronef à l'intérieur de la boîte structure. Le lidar peut également être formé de deux parties situées dans le prolongement l'une de l'autre.

### BRÈVE DESCRIPTION DES DESSINS

La figure 1 illustre un exemple de réalisation de l'aéronef selon l'invention.

La figure 2 illustre le schéma de la boîte structure dans l'exemple de la figure 1.

Les figures 3 et 4 illustrent deux autres exemples de réalisation.

### EXPOSÉ DÉTAILLÉ DE MODES DE RÉALISATION PARTICULIERS

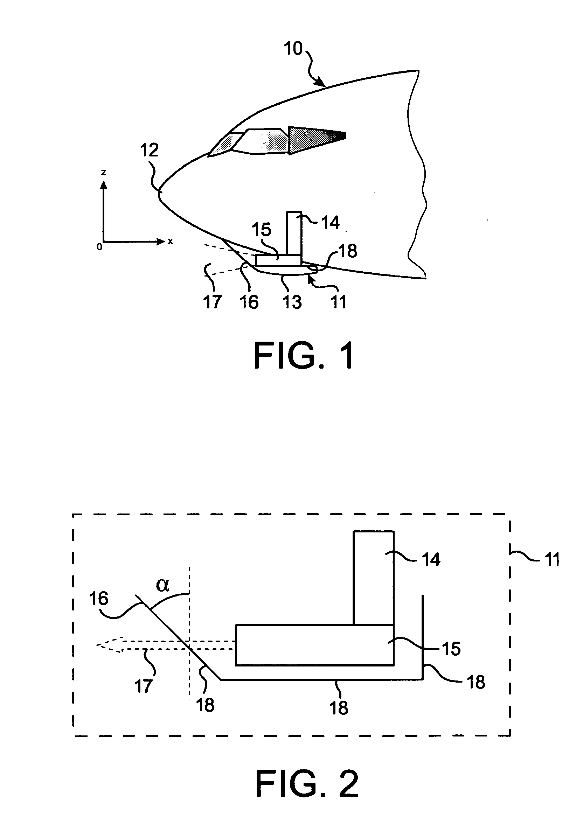

Comme illustré sur la figure 1, l'aéronef 10 selon l'invention comprend un dispositif 11, par exemple optique, de détection et/ou de mesure de perturbations atmosphériques en amont dudit aéronef, par exemple comprenant un lidar.

Ce dispositif fonctionne en zone pressurisée, et est installé dans la zone avant de l'aéronef, entre le nez de celui-ci et la case du train d'atterrissage (sur l'axe Ox), pour donner des informations de détection et/ou de mesure avec un temps d'avance suffisant pour permettre un traitement et une utilisation de celles-ci.

Dans cet exemple de réalisation, ce dispositif a la forme d'un « L » qui permet de minimiser la partie extérieure à la peau de l'aéronef. De plus il est entouré d'un caisson fort ("boîte structure") 18 qui permet d'assurer la pressurisation et qui est lui-même recouvert d'un carénage 13 qui permet de limiter l'impact aérodynamique.

Pour éviter de modifier l'aéronef de manière trop importante, il est possible d'utiliser la trappe avionique pour installer le dispositif. La partie verticale 14 du L est alors située à l'intérieur de cette trappe, et la partie horizontale 15 est située à l'extérieur de l'aéronef non modifié.

Le dispositif 11 est ainsi réalisé en deux parties :
- la première, ou « boite structure » 18, illustrée sur la figure 2, conçue pour supporter les efforts de pressurisation, et ainsi assurer le fonctionnement du dispositif tout en garantissant la sécurité de l'aéronef.
- la deuxième, qui est le carénage aérodynamique 13, servant à diminuer l'impact de la boite structure, en diminuant le décollement de l'écoulement au passage de la protubérance ainsi formée.

La boite structure 18 sert aussi au fonctionnement dudit dispositif par l'intermédiaire de la face avant 16. Cette face avant 16 contient une vitre qui assure la transmission du signal optique 17 entre l'atmosphère et le dispositif. La vitre utilisée est plate, pour des raisons de réalisation technologique, mais aussi pour des raisons optiques. En effet, l'utilisation d'une vitre courbe aurait des effets néfastes sur les faisceaux optiques émis et reçus.

Cette vitre peut être inclinée d'un angle α par rapport à l'axe Oz, tel que :
- α <45° pour des raisons optiques,
- α le plus grand possible pour des raisons aérodynamiques.

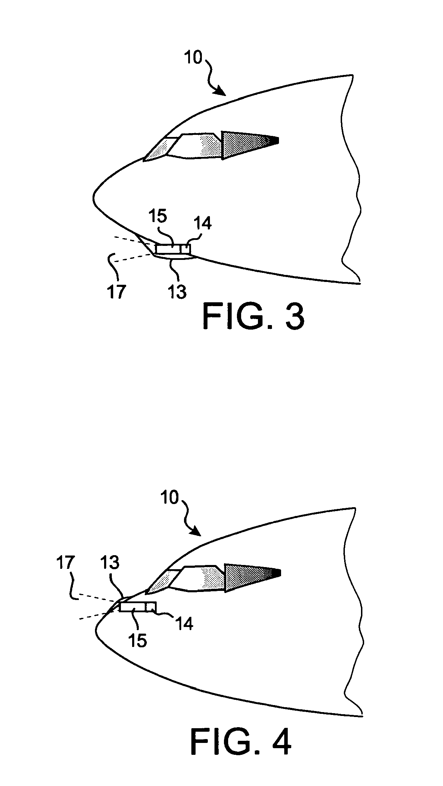

La figure 3 illustre un second exemple de réalisation qui permet de réaliser un compromis relatif à l'inclinaison de la vitre pour minimiser l'impact aérodynamique, tout en augmentant le facteur de transmission optique.

La figure 4 illustre un troisième exemple de réalisation dans lequel l'implantation du dispositif est réalisée de manière à obtenir une information de détection/mesure dans l'axe de l'aéronef.

Une réduction de la taille de ce dispositif dans le cadre d'une intégration série permettra de faciliter l'installation du dispositif dans l'aéronef. La forme en L pourra ainsi être abandonnée au profit d'un système en ligne comme présenté sur les figures 3 et 4, dans lequel les deux parties 14 et 15 du lidar sont situées dans le prolongement l'une de l'autre.

L'exemple de la figure 3 permet de réduire considérablement la taille du carénage, grâce à la diminution de la taille du dispositif et d'intégrer, dès la conception de l'aéronef, un aménagement susceptible de recevoir le dispositif (une sorte de seconde case de train peut être réalisée pour minimiser la partie extérieure à la peau avion).

Dans l'exemple de la figure 4, on cherche encore à réduire l'impact du carénage sur l'aérodynamique de l'avion en choisissant une zone où la peau a déjà un angle faible par rapport à l'axe Oz, ce qui permet d'obtenir de meilleures caractéristiques optiques.

## Revendications

1. Aéronef comprenant un dispositif de détection et/ou de mesure de perturbations atmosphériques existant en amont de l'aéronef, qui comprend un lidar, disposé entre le nez de l'aéronef et le train d'atterrissage, **caractérisé en ce que** cet aéronef comprend :
- une boite structure (18) conçue pour supporter les efforts de pressurisation, entourant le dispositif, et disposée en zone pressurisée,
- un carénage aérodynamique (13) qui recouvre cette boite structure,
et **en ce que** la boite structure comporte une vitre plate (16) en face avant et est située à l'extérieur de l'aéronef sous le carénage (13).

2. Aéronef selon la revendication 1, dans lequel le dispositif de détection et/ou de mesure est un dispositif optique.

3. Aéronef selon la revendication 1, dans lequel le lidar (14, 15) a la forme d'un « L », la partie verticale (14) du L étant située à l'intérieur de l'aéronef, et la partie horizontale (15), à l'extérieur de l'aéronef dans la boite structure (18).

4. Aéronef selon la revendication 1, dans lequel le lidar (14, 15) est formé de deux parties (14, 15) situées dans le prolongement l'une de l'autre.

## Claims

1. Aircraft comprising a device for detection and/or measurement of atmospheric disturbances upstream of the aircraft, comprising a lidar, placed between the aircraft nose and the landing gear, **characterized in that** this aircraft comprises:
- a structure box (18) designed to resist pressurization forces surrounding the device and located in the pressurized zone,
- aerodynamic fairing (13) that covers this structure box,
and **in that** the structure box includes a flat glass (16) on the front and is located outside the aircraft under the fairing (13).

2. Aircraft according to claim 1, wherein the detection and/or measurement device is an optical device.

3. Aircraft according to claim 1, wherein the lidar (14, 15) is in the shape of an "L", the vertical part (14) of the L being located inside the aircraft, and the horizontal part (15) of the L being located outside the aircraft and inside the structure box (18).

4. Aircraft according to claim 1, wherein the lidar (14, 15) is formed from two parts (14, 15) located one in line with the other.

## Patentansprüche

1. Luftfahrzeug mit einer Vorrichtung zum Erfassen und/oder Messen von atmosphärischen Störungen, die stromauf des Luftfahrzeugs besteht, und die einen zwischen dem Bug bzw. Vorderteil des Luftfahrzeugs und dem Fahrwerk angeordneten Lidar umfasst, **dadurch gekennzeichnet, dass** das Luftfahrzeug aufweist:
- einen Strukturkasten (18), der so ausgestaltet ist, dass er die Druckbeaufschlagungskräfte aushält und der die Vorrichtung umgibt und in einer druckbeaufschlagten Zone angeordnet ist,
- eine aerodynamische Verkleidung (13), welche diesen Strukturkasten bedeckt,
und **dadurch**, dass der Strukturkasten ein flaches Fensterglas (16) an der Vorderseite aufweist und sich außerhalb des Luftfahrzeugs unter der Verkleidung (13) befindet.

2. Luftfahrzeug nach Anspruch 1, wobei die Erfassungs- und/oder Messvorrichtung eine optische Vorrichtung ist.

3. Luftfahrzeug nach Anspruch 1, wobei der Lidar (14,15) die Form eines "L" aufweist, wobei der vertikale Teil (14) des "L" sich im Innern des Luftfahrzeugs befindet und der horizontale Teil (15) sich außerhalb des Luftfahrzeugs in dem Strukturkasten (18) befindet.

4. Luftfahrzeug nach Anspruch 1, wobei der Lidar (14,15) aus zwei Abschnitten (14,15) gebildet ist, die aneinandergrenzend angeordnet sind.
